# EUROPÄISCHE PATENTSCHRIFT

(11) **EP 2 451 681 B1**
(45) Veröffentlichungstag und Bekanntmachung des Hinweises auf die Patenterteilung: **01.05.2013**
(21) Anmeldenummer: 10732638.1
(22) Anmeldetag: 03.05.2010
(51) Int. Cl.: B60T 13/66, B60T 17/04, B60T 7/20, B60T 15/02, B60T 15/04, B60T 15/18

(54) **ANHÄNGERSTEUERVENTIL FÜR EINE DRUCKLUFTBREMSANLAGE**
TRAILER CONTROL VALVE FOR A COMPRESSED AIR BRAKING SYSTEM
VALVE DE COMMANDE DE REMORQUE POUR UN SYSTÈME DE FREIN À AIR COMPRIMÉ

(30) Priorität: 09.07.2009 DE 102009032313
(43) Veröffentlichungstag der Anmeldung: 16.05.2012
(73) Patentinhaber: WABCO GmbH, 30453 Hannover (DE)
(72) Erfinder: FUHRMANN, Ingo, 30855 Langenhagen (DE); GENSINK, Jan, 30826 Garbsen (DE); RABE, Martina, 30161 Hannover (DE); STEINFELD, Dieter, 30455 Hannover (DE)
(74) Vertreter: Lauerwald, Jörg
(86) Internationale Anmeldenummer: PCT/EP2010/002669
(87) Internationale Veröffentlichungsnummer: WO 2011/003486

(56) Entgegenhaltungen:
- EP-A1- 0 312 718
- EP-A2- 1 410 969
- DE-A1- 2 633 161
- DE-A1- 3 247 949
- DE-A1- 3 427 560
- DE-A1- 10 139 748
- DE-C1- 4 226 697
- FR-A2- 2 330 575

## Beschreibung

Die Erfindung betrifft ein Anhängersteuerventil für eine Druckluftbremsanlage gemäß dem Oberbegriff des Patentanspruchs 1 bzw. des Patentanspruchs 5.

Gattungsgemäße Anhängersteuerventile sind beispielsweise aus der DE 43 44 371 A1, der EP 1 410 969 A2 oder der DE 199 03 286 A1 bekannt. Solche Anhängersteuerventile kommen in Druckluftbremsanlagen von Nutzfahrzeugen zum Einsatz, die als Zugfahrzeug zum Ankoppeln eines Anhängefahrzeugs ausgebildet sind. Das Anhängersteuerventil dient dabei zur Übertragung von Bremsdrücken vom Zugfahrzeug zu dem Anhängefahrzeug. Üblicherweise werden zwei Bremsdrücke übertragen, nämlich ein Vorratsdruck aus einem Vorratsbehälter des Zugfahrzeugs sowie ein Steuerdruck, der den Bremswunsch des Fahrers repräsentiert. Ein solches Anhängersteuerventil weist ein Abrisssicherungsventil auf, das bei einem Defekt der pneumatischen Bremsleitungen zwischen dem Zugfahrzeug und dem Anhängefahrzeug den Vorratsdruck des Zugfahrzeugs gegen einen unerwünschten Druckverlust in Folge des Defekts absichert.

Der Erfindung liegt die Aufgabe zugrunde, ein Anhängersteuerventil, wie es beispielsweise aus der DE 43 44 371 A1 bekannt ist, hinsichtlich seines Aufbaus zu vereinfachen.

Diese Aufgabe wird durch die in den Patentansprüchen 1 und 5 angegebene Erfindung gelöst. Vorteilhafte Ausgestaltungen der Erfindung sind in den Unteransprüchen angegeben.

Die Erfindung hat den Vorteil, dass das Anhängersteuerventil insbesondere im Bereich einer Abrisssicherungs-Ventileinrichtung mit einer geringeren Zahl an Bauteilen aufgebaut ist. Zudem sind die verbleibenden Bauteile hinsichtlich der Montagefreundlichkeit des Anhängersteuerventils günstiger gestaltet. Hierdurch können Kosten bei der Herstellung und Montage des erfindungsgemäßen Anhängersteuerventils eingespart werden.

Gemäß der Erfindung weist der Schaltkolben eine zweite Kolbenwirkfläche auf, die mit einem Vorratsdruck beaufschlagbar ist, wobei die erste und die zweite Kolbenwirkfläche einander entgegen gerichtete Betätigungskräfte auf den Schaltkolben (21) ausüben. Der Schaltkolben kann daher durch entsprechende Druckbeaufschlagung der ersten und der zweiten Kolbenwirkfläche in die jeweils gewünschte Stellung gebracht werden.

Gegenüber dem aus der DE 43 44 371 A1 bekannten Anhängersteuerventil ist somit im Wirkungsbereich des Vorratsdrucks ein definierter, als pneumatische Wirkfläche wirksamer Flächenbereich an dem Schaltkolben vorgesehen, der zur Rückstellung des Schaltkolbens entgegen einer von der ersten Wirkfläche ausgeübten Kraft dient. Eine solche Wirkfläche war bei dem aus der DE 43 44 371 A1 bekannten Anhängersteuerventil nicht vorgesehen. Mit der zweiten Wirkfläche wird der Vorteil erzielt, dass auf eine Rückstellfeder (Bezugszeichen 53 in DE 43 44 371 A1) zur Rückstellung des Schaltkolbens in seine obere Position vollständig verzichtet werden kann, so dass weniger Bauteile erforderlich sind. Eine Rückstellung kann bei dem erfindungsgemäßen Anhängersteuerventil bereits aufgrund der über die zweite Wirkfläche aufgebauten Rückstellkraft erfolgen.

Der Entfall der Rückstellfeder hat den weiteren Vorteil, dass für die Rückstellung des Schaltkolbens nicht mehr eine auf einen Absolutwert festgelegte Ansprechgrenze, die durch die konstante Federkraft definiert ist, vorliegt, sondern eine relative Rückstellkraft, die sich aufgrund der Flächenverhältnisse zwischen der ersten Kolbenwirkfläche und der zweiten Kolbenwirkfläche ergibt. Dies hat den Vorteil, dass eine Betätigung des Schaltkolbens unabhängig von der absoluten Höhe des Vorratsdrucks möglich ist. Hierdurch wird die Abrisssicherungsfunktion zudem unempfindlicher gegen ein ungewolltes Ansprechen bei relativ langen pneumatischen Zuleitungen zu dem Anhängersteuerventil.

Gemäß der Erfindung weist die zweite Wirkfläche eines Schaltkolbens in der Abrisssicherungs-Ventileinrichtung, die der ersten Wirkfläche entgegenwirkend ist, einen größeren Durchmesser auf als der Drosselkolben der Abrisssicherungs-Ventileinrichtung. Dies hat den Vorteil, dass eine vollständige vormontierte Einheit aus dem Schaltkolben und dem darauf angeordneten Drosselkolben in eine entsprechende, als Aufnahmeraum dienende Längsbohrung der Abrisssicherungs-Ventileinrichtung von einer Seite her eingeschoben werden kann. Der Drosselkolben kann vorteilhaft vor dem Einschieben der Einheit in die Längsbohrung auf dem Schaltkolben montiert werden. Die bei bekannten Anhängersteuerventilen relativ aufwendige Montage des Drosselkolbens auf dem Schaltkolben innerhalb des Anhängersteuerventils, d. h. bei bereits in der Längsbohrung angeordnetem Schaltkolben, kann hierdurch entfallen. Hierdurch entfallen insbesondere Montage- und Bearbeitungsschritte von zwei Seiten in der Längsbohrung. Die Bearbeitungsschritte bei der Herstellung der Längsbohrung werden vereinfacht, weil auch hier eine Bearbeitung beispielsweise mit einem Fräser nur von einer Seite des Geräts erforderlich ist.

Ein weiterer Vorteil der Erfindung besteht darin, dass auf den bisher vorgesehenen relativ kleinen Dichtring auf dem Schaltkolben (Bezugszeichen 50 in DE 43 44 371 A1) verzichtet werden kann, so dass ein weiteres Bauteil eingespart wird. Dichtringe mit kleinem Durchmesser sind zudem relativ verschleißanfällig. Durch den Entfall eines solchen kleinen Dichtrings wird somit das gesamte Anhängersteuerventil robuster und verschleißunempfindlicher.

Gemäß einer vorteilhaften Weiterbildung der Erfindung ist der Drosselkolben relativ zu dem Schaltkolben längsbeweglich. Vorteilhaft kann der Drosselkolben insbesondere verschieblich auf einen zylindrischen Bereich des Schaltkolbens aufgeschoben sein, was wiederum einem einfachen Aufbau und einer schnellen Montierbarkeit des Anhängersteuerventils zugute kommt.

Gemäß der Erfindung weist das Anhängersteuerventil einen in der Längsbohrung vorgesehenen, im Wesentlichen unbeweglichen Zusatzkolben auf, der auf der Seite der ersten Kolbenwirkfläche des Schaltkolbens angeordnet ist. Der Zusatzkolben wirkt einerseits als Wegbegrenzung, d. h. als Anschlag für den Schaltkolben. Des weiteren ist der Zusatzkolben vorteilhaft mit einer Drosselrückschlagfunktion versehen, die über die Drossel eine langsame Belüftung einer die erste Kolbenwirkfläche beaufschlagenden Kammer und über die Rückschlagventilfunktion eine schnelle Entlüftung dieser Kammer zulässt. Der Zusatzkolben erlaubt einen einfachen Aufbau und in Folge der Integration der Drosselrückschlagfunktion eine einfache, schnelle Montage des Anhängersteuerventils.

Gemäß einer vorteilhaften Weiterbildung der Erfindung weist der Zusatzkolben in einer umlaufenden Nut einen Lippendichtring auf, dessen Lippendichtung mit der Wand der Längsbohrung ein Rückschlagventil bildet. Hierbei wird vorteilhaft die Flexibilität der Lippendichtung eines Lippendichtrings ausgenutzt, um auf konstruktiv einfach herzustellende Weise ohne zusätzliche Bauteile das für eine schnelle Entlüftung erforderliche Rückschlagventil zu bilden. Die für die langsame Belüftung erforderliche Drosselöffnung kann vorteilhaft beispielsweise durch eine oder mehrere Bohrungen in dem Lippendichtring, z. B. in der Lippendichtung, oder an anderer Stelle des Zusatzkolbens vorgesehen sein. Hierdurch können die bisherigen diversen Bauteile des Drosselrückschlagventils reduziert werden auf das Einsetzen des erwähnten Lippendichtrings in die umlaufende Nut des Zusatzkolbens und das anschließende Einsetzen des Zusatzkolbens in die Längsbohrung. Hierdurch wird eine weitere Kostenoptimierung des Anhängersteuerventils hinsichtlich Bauteile- und Montageaufwand erzielt.

Gemäß einer vorteilhaften Weiterbildung der Erfindung ist als Drosselöffnung ein Bypasskanal vorgesehen, der einen den Lippendichtring umgehenden Strömungskanal bildet. Der Bypasskanal ist gemäß einer vorteilhaften Weiterbildung in Form einer in Längsrichtung des Zusatzkolbens verlaufenden Nut innerhalb derjenigen Nut vorgesehen, die zur Aufnahme des Lippendichtrings vorgesehen ist. Eine solche in Längsrichtung verlaufende Nut ist fertigungstechnisch einfach zu realisieren und daher kostengünstig vorzusehen.

Gemäß einer vorteilhaften Weiterbildung der Erfindung ist der Zusatzkolben mit einer Gehäuse-Abdeckung des Anhängersteuerventils verbunden oder damit einstückig ausgebildet. Hierdurch wird die Montage des erfindungsgemäßen Anhängersteuerventils weiter vereinfacht und kostengünstiger gestaltet. Es muss hiermit lediglich die Einheit aus Zusatzkolben und Gehäuseabdeckung an dem Anhängersteuerventil montiert werden, so dass ein separater Montageschritt für den einzelnen Zusatzkolben entfallen kann.

Die Erfindung wird nachfolgend anhand von Ausführungsbeispielen unter Verwendung von Zeichnungen näher erläutert.

Es zeigen
- Fig. 1: die Anhängersteuerung betreffenden Teile einer Druckluftbremsanlage und
- Fig. 2: einen Zusatzkolben in perspektivischer Darstellung.

In den Figuren werden gleiche Bezugszeichen für einander entsprechende Elemente verwendet.

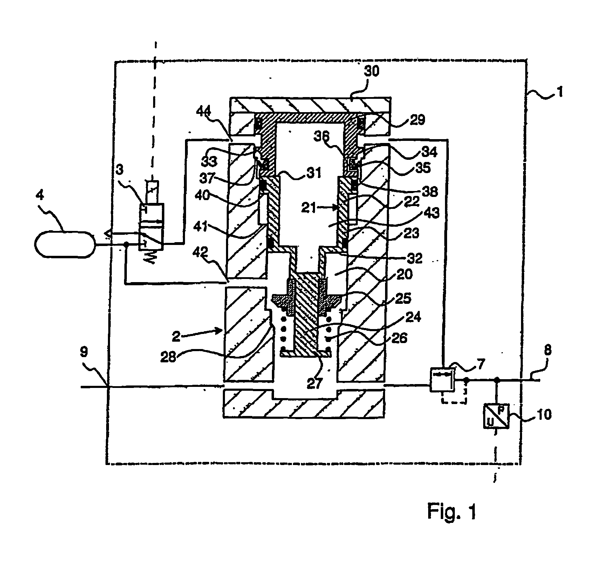

In der Figur 1 sind diejenigen Teile einer Druckluftbremsanlage für ein Zugfahrzeug dargestellt, die die Anhängersteuerung bzw. das Anhängersteuerventil betreffen. Es ist ein Anhängersteuerventil 1 dargestellt, von dem ein Abrisssicherungsventil 2 detailliert in Schnittdarstellung dargestellt ist. Die übrigen Elemente des Anhängersteuerventils 1 sind zur Erläuterung von dessen Funktion in Form von pneumatischen Schaltelementen schematisch dargestellt.

Das Anhängersteuerventil 1 weist neben dem Abrisssicherungsventil 2 ein Vor-steuerungs-Magnetventil 3, ein Relaisventil 7 sowie einen Bremsdrucksensor 10 auf. Das erfindungsgemäße Anhängersteuerventil 1 kann beispielsweise in einer elektronisch gesteuerten Bremsanlage für ein Nutzfahrzeug verwendet werden. In diesem Fall ist eine Steuerelektronik vorgesehen, die über das Vorsteuerungs-Magnetventil 3 sowie zur Druckverstärkung über das Relaisventil 7 einen gewünschten Bremsdruckwert an einem Steuerausgang 8 bereitstellt. Zur Regelung des bereitgestellten Drucks wird dieser Druck über den Drucksensor 10 sensiert und zur Steuerelektronik zurückgeführt.

Das Anhängersteuerventil 1 weist zudem in üblicher Weise Anschlüsse für einen Bremswertgeber sowie ein Handbremsventil auf (nicht dargestellt). Ferner ist ein Anschluss für einen Druckluftvorratsbehälter 4 vorgesehen. Der Bremswertgeber kann vorteilhaft die erwähnte Steuerelektronik zur Steuerung des an dem Ausgang 8 bereitgestellten Steuerdrucks beinhalten. Über einen Vorratsanschluss 9 stellt das Anhängersteuerventil 1 zudem einen Vorratsdruck, abgeleitet aus dem Druckluftvorrat im Druckluftvorratsbehälter 4, zur Verfügung.

Das Abrisssicherungsventil 2 weist in einer Längsbohrung 20 einen Schaltkolben 21 auf. Der Schaltkolben 21 ist in der Längsbohrung 20 längsbewegbar. Der Schaltkolben 21 weist einen oberen Kolbenabschnitt 22 und einen unteren Kolbenabschnitt 23 auf. Der obere Kolbenabschnitt 22 und der untere Kolbenabschnitt 23 sind jeweils über in umlaufenden Nuten des Schaltkolbens angeordnete Dichtringe abgedichtet.

Wie in der Figur 1 erkennbar ist, ist die Längsbohrung 20 in Form einer Stufenbohrung ausgebildet, d. h., sie verjüngt sich stufenweise ausgehend von dem in der Figur 1 oben dargestellten Ende nach unten hin. Die Längsbohrung 20 kann daher auf einfache Weise durch Bearbeitungsschritte von einer Seite des Gehäuses des Anhängersteuerventils 1 hergestellt werden. Die Abstufungen der Längsbohrung 20 weisen bestimmte Funktionen auf, die nachfolgend erläutert werden.

Der Schaltkolben 21 wird hinsichtlich seiner Längsbewegung nach unten hin durch eine Abstufung 41 begrenzt, mit der ein Anschlag 40 des Schaltkolbens 21 zur Anlage kommen kann. In entgegengesetzter Bewegungsrichtung des Schaltkolbens 21 wird dessen Längsbewegung durch einen oberhalb des Schaltkolbens 21 vorgesehenen Zusatzkolben 29 begrenzt, der im Wesentlichen unbeweglich in einem oberen Teil der Längsbohrung 20 angeordnet ist.

Der Schaltkolben 21 weist eine erste Wirkfläche 31 auf, die auf der dem Zusatzkolben 29 zugewandten Seite vorgesehen ist. Eine zweite Wirkfläche 32 ist auf einer entgegengesetzten Seite des Schaltkolbens 21 vorgesehen, so dass durch Druckbeaufschlagung der ersten oder der zweiten Kolbenwirkfläche 31, 32 einander entgegen gerichtete Betätigungskräfte auf den Schaltkolben 21 ausgeübt werden können. Die zweite Kolbenwirkfläche 32 wird an der Unterseite des zweiten Abschnitts 23 des Schaltkolbens 21 gebildet. Die erste und die zweite Kolbenwirkfläche 31, 32 können beispielsweise im Flächenverhältnis 4:3 ausgebildet sein, wobei die zweite Kolbenwirkfläche 32 kleiner ist als die erste Kolbenwirkfläche 31.

Im Bereich eines länglichen unteren Fortsatzes 24 des Schaltkolbens 21 ist ein Drosselkolben 25 vorgesehen, der auf dem Schaltkolben 21 längsbeweglich angeordnet ist. Der Drosselkolben 25 ist dabei auf der länglichen zylindrischen Außenfläche des Fortsatzes 24 aufgeschoben. Der Drosselkolben 25 wird durch eine Feder 26, die sich auf einem Endabschnitt 27 des Schaltkolbens 21 abstützt, in einer Normalposition gehalten, bei der der Drosselkolben 25 in der Darstellung gemäß Fig. 1 in seiner oberen Position ist.

Durch Druckbeaufschlagung des Drosselkolbens 25 von seiner Oberseite kann dieser entgegen der Kraft der Feder 26 nach unten in Richtung des Endabschnitts 27 des Schaltkolbens 21 ausgelenkt werden. Eine solche Abwärtsbewegung des Drosselkolbens 25 wird außerdem durch eine Verjüngung 28 in der Längsbohrung 20 begrenzt, mit der der Drosselkolben 25 ab einer bestimmten Position zur Anlage kommt. In diesem Zustand schließt der Drosselkolben die Längsbohrung 20 gegen eine Druckluftströmung weitestgehend ab.

Der Zusatzkolben 29 ist z. B. über Schrauben mit einer Gehäuseabdeckung 30 verbunden. Der Zusatzkolben 29 weist eine Mehrzahl von Nuten auf, wobei in einer umlaufenden Umfangsnut ein Lippendichtring 35 angeordnet ist. Der Lippendichtring ist vorteilhaft als Nutring ausgebildet. Der Lippendichtring 35 liegt mit seiner Lippendichtung an der Wand der Längsbohrung 20 an und dichtet diese ab. In der umlaufenden Nut am Umfang des Zusatzkolbens 29, in der der Lippendichtring 35 angeordnet ist; ist ein Bypasskanal in Form einer in Längsrichtung des Zusatzkolbens 29 verlaufenden Nut 36 vorgesehen. Die Nut 36 erlaubt eine gedrosselte Druckluftströmung in Sperrrichtung der Rückschlagventil-Funktion des Lippendichtrings 35, um eine Druckluftbeaufschlagung einer Kammer 43 zur Beaufschlagung der ersten Kolbenwirkfläche 31 zu ermöglichen. Die Belüftung der Kammer 43 erfolgt über einen Anschluss 44 von dem Vorsteuerungs-Magnetventil 3. Die in entgegengesetzter Richtung als geöffnetes Rückschlagventil wirkende Lippendichtung des Lippendichtrings 35 ermöglicht eine schnelle Entlüftung der Kammer 43.

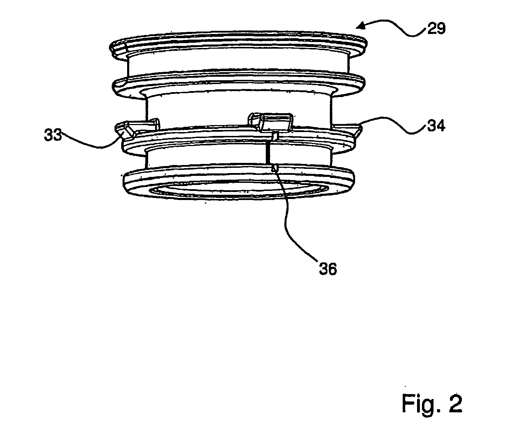

Der Zusatzkolben 29 weist ferner umlaufende rippenartige Zentrierelemente 33, 34 auf, über die eine einfache und schnelle Montage des Zusatzkolbens 29 in der Längsbohrung 20 erleichtert wird. Die Zentrierelemente 33, 34 bewirken aufgrund ihrer in Einsetzrichtung des Zusatzkolbens 29 abgeschrägten Formgebung eine schnelle Zentrierung beim Einsetzen des Zusatzkolbens 29 in die Längsbohrung 20 und verhindern eine Beschädigung des Lippendichtrings 35. Die äußere Form des Zusatzkolbens 29 sowie die Anordnung der Zentrierelemente 33, 34 wird zusätzlich durch die Fig. 2 verdeutlicht.

Gemäß einer vorteilhaften Ausgestaltung ist in dem den Zusatzkolben 29 aufnehmenden Abschnitt der Längsbohrung 20 ein Absatz 37 vorgesehen, d. h. eine Verjüngung der Längsbohrung. Der Absatz 37 ist etwas oberhalb der endgültigen Position des Lippendichtrings 35 nach der fertigen Montage des Anhängersteuerventils 1 angeordnet. Der Absatz 37 sorgt dafür, dass eine Falschmontage des Lippendichtrings 35 in der umlaufenden Nut vermieden wird, d. h. eine Montage in der Art, dass die Rückschlagventilfunktion fälschlicherweise in der entgegengesetzten Richtung wirken würde. In einem solchen Fall käme der etwas hervorstehende äußere Rand der Lippendichtung bei der Montage des Zusatzkolbens 29 in der Längsbohrung 20 mit dem Absatz 37 zur Anlage. Der Absatz 37 würde dann ein weiteres Einführung des Zusatzkolbens erheblich erschweren, was einem Monteur somit einen Hinweis gibt, dass der Lippendichtring 35 verkehrt herum aufgesetzt wurde.

Die Fig. 2 zeigt den Zusatzkolben 29 in perspektivischer Darstellung ohne den eingesetzten Lippendichtring 35. Erkennbar ist neben der Mehrzahl der um den Umfang des Zusatzkolbens 29 umlaufenden Nuten die als Bypasskanal ausgebildete Längsnut 36 sowie die Zentrierelemente 33, 34.

Die Abrisssicherungs-Ventileinrichtung 2 hat die folgende Funktion. Im normalen Fahrbetrieb soll die Abrisssicherungs-Ventileinrichtung 2 den Vorratsdruck in Richtung Anhängefahrzeug unverändert durchlassen. Im Fall einer abgerissenen Steuerdruckleitung zum Anhänger, d. h. eines Defekts der an den Steuerausgang 8 angeschlossenen der Druckluftleitung zum Anhänger, muss die Abrisssicherungs-Ventileinrichtung 2 den Vorratsdruck des Zugfahrzeugs im Fall eines starken Bremswunschs absichern und zugleich im Zusammenwirken mit dem Relaisventil 7 die an den Vorratsanschluss 9 angeschlossene Druckluftleitung zum Anhänger entlüften. Dies führt zu einer Bremsung des Anhängefahrzeugs durch das Entlüften der den Vorratsanschluss 9 angeschlossenen Druckluftleitung. Durch ein in dem Anhängefahrzeug vorgesehenes Anhängerbremsventil, das seinerseits eine Notbremsfunktion aufweist, wird in einem solchen Zustand das Anhängefahrzeug automatisch angebremst.

Die Abrisssicherungs-Ventileinrichtung 2 hat drei Schaltstellungen:

### 1. Normaler Fahrbetrieb (wie in der Fig. 1 dargestellt):

Der Schaltkolben 21 ist in seiner oberen Stellung. Es erfolgt in diesem Fahrbetrieb keine Bremsung oder höchstens eine Bremsung mit geringem Bremsdruck. In diesem Zustand bewirkt der auf die zweite Kolbenwirkfläche 32 einwirkende Vorratsdruck von dem Vorratsbehälter 4 ein Halten des Schaltkolbens 21 in seiner in der Fig. 1 dargestellten oberen Position. Von dem Vorsteuerungs-Magnetventil 3 werden über den Anschluss 43 allenfalls geringe Druckwerte auf die erste Kolbenwirkfläche 31 über den Bypasskanal 36 übertragen, so dass keine Abwärtsbewegung des Schaltkolbens 21 erfolgt. In diesem Zustand kann die von dem Vorratsbehälter 4 kommende Druckluft den Drosselkolben 25 ungehindert passieren und dem Vorratsanschluss 9 für das Anhängefahrzeug zugeführt werden.

### 2. Scharfstellung:

Ab einem bestimmten Druckwert, der von dem Vorsteuerungs-Magnetventil 3 ausgegeben wird, wird durch die dadurch bewirkte Druckbeaufschlagung der ersten Kolbenwirkfläche 31 eine entsprechende Betätigungskraft auf den Schaltkolben 21 ausgeübt, der die entgegengesetzte Betätigungskraft durch die Druckluftbeaufschlagung der zweiten Kolbenwirkfläche 32 übersteigt. Hierdurch bewegt sich der Schaltkolben 21 in seine untere Position, in der der Absatz 40 des Schaltkolbens 21 mit der Verjüngung 41 der Längsbohrung 20 zur Anlage kommt. Dies erfolgt beispielsweise bei einem von dem Vorsteuerungs-Magnetventil 3 ausgegebenen Druck von 6 bar, wobei von einem Vorratsdruck von 8,5 bar ausgegangen wird. In dieser Stellung des Schaltkolbens 21 ist der Drosselkolben 25 bereits relativ dicht an die Verjüngung 28 herangeführt, so dass sich bereits ein verringerter Strömungsquerschnitt für die von dem Vorratsbehälter 4 zu dem Vorratsanschluss 9 strömende Druckluft ergibt. So lange die hier durchströmende Druckluft eine relativ geringe Strömungsgeschwindigkeit aufweist, kann diese Drosselstelle passiert werden. Der Drosselkolben 25 wird hierbei durch die Feder 26 in seiner oberen Position gehalten.

### 3. Abrissstellung:

Sofern ein Defekt an der an den Vorratsanschluss 9 angeschlossenen Druckluftleitung auftritt, vergrößert sich die Luftaustrittsmenge an der Ausgangsseite des Anhängersteuerventils 1 erheblich, was zu einer Erhöhung der Strömungsgeschwindigkeit an der Drosselstelle zwischen dem Drosselkolben 25 und der Verjüngung 28 führt. Hierdurch erhöht sich der Staudruck an der Oberseite des Drosselkolbens 25. Der erhöhte Staudruck bewirkt eine Längsbewegung des Drosselkolbens 25 entgegen der Kraft der Feder 26 in Richtung des Endabschnitts 27 des Schaltkolbens 21. Der Drosselkolben 25 kommt dabei mit der Verjüngung 28 zur Anlage und dichtet hierdurch den Strömungspfad ab. Hierdurch wird ein unerwünschtes weiteres Austreten von Druckluft aus dem Vorratsbehälter 4 zu dem Defekt an der Druckluftleitung hin verhindert. Vorteilhaft ist eine definierte Restundichtigkeit vorgesehen, um ein Öffnen nach Beendigung der Bremsung zu ermöglichen.

Die langsame Belüftung der Kammer 43 über den als Drosselstelle wirkenden Bypasskanal 36 bewirkt einen relativ langsamen Druckaufbau in der Kammer 43. Dies hat zur Folge, dass der Schaltkolben 21 nicht bei jeder kurzzeitigen Druckerhöhung an dem Anschluss 44 ausgelenkt wird, sondern erst bei einer eine bestimmte Zeit lang anliegenden Druckerhöhung. Auf diese Weise ist eine Zeitverzögerung beim Auslösen der Scharfstellung der Abrisssicherungs-Ventileinrichtung 2 vorgesehen.

## Patentansprüche

1. Anhängersteuerventil (1) für eine Druckluftbremsanlage mit einer Abrisssicherungs-Ventileinrichtung (2), die einen in einer Längsbohrung (20) längsbeweglichen Schaltkolben (21) aufweist, wobei der Schaltkolben (21) eine erste Kolbenwirkfläche (31) aufweist, die mit einem Steuerdruck beaufschlagbar ist, sowie mit einem mit dem Schaltkolben (21) verbundenen Drosselkolben (25), **dadurch gekennzeichnet, dass** der Schaltkolben (21) hinsichtlich seiner Längsbewegung nach unten hin durch eine Abstufung (41) begrenzt und in entgegengesetzter Bewegungsrichtung durch einen oberhalb des Schaltkolbens (21) vorgesehenen Zusatzkolben (29) begrenzt ist, der im Wesentlichen unbeweglich in einem oberen Teil der Längsbohrung (20) angeordnet ist, wobei der Schaltkolben (21) eine erste Wirkfläche (31) aufweist, die auf der dem Zusatzkolben (29) zugewandten Seite vorgesehen ist, wobei der Schaltkolben (21) eine zweite Kolbenwirkfläche (32) aufweist, die mit einem Vorratsdruck beaufschlagbar ist, wobei die erste und die zweite Kolbenwirkfläche (31, 32) einander entgegen gerichtete Betätigungskräfte auf den Schaltkolben (21) ausüben, und die zweite Kolbenwirkfläche (32) einen größeren Durchmesser aufweist als der Drosselkolben (25), wobei der Zusatzkolben (29) in einer umlaufenden Nut einen Lippendichtring (35), insbesondere einen Nutring, aufweist, dessen Lippendichtung mit der Wand der Längsbohrung ein Rückschlagventil bildet.

2. Anhängersteuerventil nach Anspruch 1, **dadurch gekennzeichnet, dass** der Drosselkolben (25) relativ zu dem Schaltkolben (21) längsbeweglich ist.

3. Anhängersteuerventil nach Anspruch 1 oder 2, **dadurch gekennzeichnet, dass** der Drosselkolben (25) auf der mit der zweiten Kolbenwirkfläche (32) versehenen Seite des Schaltkolbens (21) angeordnet ist.

4. Anhängersteuerventil nach wenigstens einem der vorhergehenden Ansprüche, **dadurch gekennzeichnet, dass** der Schaltkolben (21) in der Längsbohrung (20) ohne Beaufschlagung durch Federkraft in Richtung der mit der ersten Kolbenwirkfläche (31) versehenen Seite längsbewegbar ist.

5. Anhängersteuerventil nach wenigstens einem der vorhergehenden Ansprüche, **dadurch gekennzeichnet, dass** der Zusatzkolben (29) einen Bypasskanal (36) aufweist, der einen den Lippendichtring (35) umgehenden Strömungskanal bildet.

6. Anhängersteuerventil nach Anspruch 5, **dadurch gekennzeichnet, dass** der Bypasskanal (36) eine in Längsrichtung des Zusatzkolbens (29) verlaufende Nut in der den Lippendichtring (35) aufnehmenden Nut aufweist.

7. Anhängersteuerventil nach Anspruch 5 oder 6, **dadurch gekennzeichnet, dass** der Bypasskanal (36) eine Bohrung in dem Zusatzkolben (29) aufweist.

8. Anhängersteuerventil nach wenigstens einem der vorhergehenden Ansprüche, **dadurch gekennzeichnet, dass** der Zusatzkolben (29) mit einer Gehäuse-Abdeckung (30) des Anhängersteuerventils (1) verbunden ist oder einstückig ausgebildet ist.

## Claims

1. Trailer control valve (1) for a compressed air braking system with a breakaway safeguard valve device (2) which has a switching piston (21) which can move longitudinally in a longitudinal bore (20), wherein the switching piston (21) has a first effective piston area (31) to which a control pressure can be applied, and with a throttle piston (25) connected to the switching piston (21), **characterized in that**, in terms of its longitudinal movement, the switching piston (21) is limited downwardly by a step (41) and in the opposite direction of movement by an auxiliary piston (29) which is provided above the switching piston (21) and which is arranged substantially immovably in an upper part of the longitudinal bore (20), wherein the switching piston (21) has a first effective area (31) which is provided on the side facing the auxiliary piston (29), wherein the switching piston (21) has a second effective piston area (32) to which a supply pressure can be applied, wherein the first and the second effective piston areas (31, 32) exert mutually oppositely directed actuating forces on the switching piston (21), and the second effective piston area (32) has a larger diameter than the throttle piston (25), wherein the auxiliary piston (29) has, in a peripheral groove, a lipped sealing ring (35), in particular a grooved ring, whose lip seal forms a nonreturn valve with the wall of the longitudinal bore.

2. Trailer control valve according to Claim 1, **characterized in that** the throttle piston (25) can move longitudinally relative to the switching piston (21).

3. Trailer control valve according to Claim 1 or 2, **characterized in that** the throttle piston (25) is arranged on that side of the switching piston (21) provided with the second effective piston area (32).

4. Trailer control valve according to at least one of the preceding claims, **characterized in that** the switching piston (21) can move longitudinally in the longitudinal bore (20) without being acted on by spring force in the direction of the side provided with the first effective piston area (31).

5. Trailer control valve according to at least one of the preceding claims, **characterized in that** the auxiliary piston (29) has a bypass duct (36) which forms a flow duct bypassing the lipped sealing ring (35).

6. Trailer control valve according to Claim 5, **characterized in that** the bypass duct (36) has, in the groove receiving the lipped sealing ring (35), a groove which extends in the longitudinal direction of the auxiliary piston (29).

7. Trailer control valve according to Claim 5 or 6, **characterized in that** the bypass duct (36) has a bore in the auxiliary piston (29).

8. Trailer control valve according to at least one of the preceding claims, **characterized in that** the auxiliary piston (29) is connected to or is formed in one piece with a housing cover (30) of the trailer control valve (1).

## Revendications

1. Valve de commande de remorque (1) pour un système de frein à air comprimé comprenant un dispositif de valve de sécurité de rupture (2) qui comprend un piston de commutation (21) mobile longitudinalement dans un alésage longitudinal (20), le piston de commutation (21) comprenant une première surface active de piston (31) qui peut être sollicitée avec une pression de commande, et comprenant un piston d'étranglement (25) relié au piston de commutation (21), **caractérisée en ce que** le piston de commutation (21), en ce qui concerne son déplacement longitudinal, est limité vers le bas par un étagement (41) et, dans la direction de déplacement opposée, est limité par un piston supplémentaire (29) prévu au-dessus du piston de commutation (21), lequel piston supplémentaire est disposé de manière essentiellement fixe dans une partie supérieure de l'alésage longitudinal (20), le piston de commutation (21) comprenant une première surface active (31) qui est prévue du côté tourné vers le piston supplémentaire (29), le piston de commutation (21) comprenant une deuxième surface active de piston (32) qui peut être sollicitée avec une pression d'alimentation, la première et la deuxième surface active de piston (31, 32) exerçant sur le piston de commutation (21) des forces d'actionnement opposées l'une à l'autre, et la deuxième surface active de piston (32) présentant un plus grand diamètre que le piston d'étranglement (25), le piston supplémentaire (29) comprenant, dans une rainure périphérique, une bague d'étanchéité à lèvre (35), en particulier une bague rainurée, dont le joint d'étanchéité à lèvre forme avec la paroi de l'alésage longitudinal une valve antiretour.

2. Valve de commande de remorque selon la revendication 1, **caractérisée en ce que** le piston d'étranglement (25) est mobile longitudinalement par rapport au piston de commutation (21).

3. Valve de commande de remorque selon la revendication 1 ou 2, **caractérisée en ce que** le piston d'étranglement (25) est disposé du côté du piston de commutation (21) pourvu de la deuxième surface active de piston (32).

4. Valve de commande de remorque selon au moins l'une quelconque des revendications précédentes, **caractérisée en ce que** le piston de commutation (21) peut être déplacé longitudinalement dans l'alésage longitudinal (20), sans sollicitation par une force de ressort, en direction du côté pourvu de la première surface active de piston (31).

5. Valve de commande de remorque selon au moins l'une quelconque des revendications précédentes, **caractérisée en ce que** le piston supplémentaire (29) comprend un conduit de dérivation (36) qui forme un conduit d'écoulement contournant la bague d'étanchéité à lèvre (35).

6. Valve de commande de remorque selon la revendication 5, **caractérisée en ce que** le conduit de dérivation (36) comprend une rainure, s'étendant dans la direction longitudinale du piston supplémentaire (29), dans la rainure recevant la bague d'étanchéité à lèvre (35).

7. Valve de commande de remorque selon la revendication 5 ou 6, **caractérisée en ce que** le conduit de dérivation (36) comprend un alésage dans le piston supplémentaire (29).

8. Valve de commande de remorque selon au moins l'une quelconque des revendications précédentes, **caractérisée en ce que** le piston supplémentaire (29) est relié à un couvercle de boîtier (30) de la valve de commande de remorque (1) ou est réalisé d'une seule pièce avec celui-ci.
